# EUROPEAN PATENT APPLICATION

(11) **EP 4 729 785 A1**
(43) Date of publication of application: **22.04.2026**
(21) Application number: 25206815.0
(22) Date of filing: 06.10.2025
(51) Int. Cl.: F04D 13/06, F01P 5/10, F04D 29/42, F04D 29/60, F04D 29/62

(54) **COOLING MODULE**

(30) Priority: 15.10.2024 JP 2024179736
(71) Applicant: AISIN CORPORATION, Aichi 448-8650 (JP)
(72) Inventor: UCHIYAMA, Yoshinobu, Kariya, 448-8650 (JP); OSUKA, Shinya, Kariya, 448-8650 (JP); HISAEDA, Yusuke, Kariya, 448-8650 (JP); KOMORI, Noriko, Kariya, 448-8650 (JP); YOSHIDA, Kazuto, Kariya, 448-8650 (JP); KOZAKI, Tomohiro, Kariya, 448-8650 (JP); KURIMOTO, Akira, Kariya, 448-8650 (JP); YAMADA, Koji, Kariya, 448-8650 (JP)
(74) Representative: Winter, Brandl - Partnerschaft mbB

(57) **Abstract**

A cooling module (100) includes a pump (2) that pumps fluid (F), and a manifold (1) including inside at least one fluid channel (L) through which the fluid (F) flows, in which the manifold (1) includes a discharge portion (13) from which the fluid (F) from the pump (2) is discharged, a channel connection chamber (14) connected to upstream of the fluid channel (L) in a direction in which the fluid (F) flows, and a communication channel (15) allowing the discharge portion (13) and the channel connection chamber (14) to communicate with each other.

## Description

### TECHNICAL FIELD

The present disclosure relates to a cooling module.

### BACKGROUND DISCUSSION

Conventionally, cooling water is used for cooling motors, batteries, and the like included in a vehicle such as an electric vehicle. As a technique related to cooling using such cooling water, for example, there is a technique described in WO 2024/014491 A of which the source is described below.

WO 2024/014491 A describes a cooling module. The cooling module includes a manifold including a plurality of housings having joint portions. The manifold includes a plurality of channels and plurality of spare chambers formed across at least two of the plurality of housings.

In the cooling module described in WO 2024/014491 A, flow of a coolant flowing through the channels is controlled by a water pump. However, the cooling module is configured such that the coolant discharged from the pump hits a wall portion of the housings. Thus, because a flow rate of the cooling water is insufficient with respect to a desired flow rate of the cooling water due to pressure loss, it is necessary to increase the output of the pump. This causes an increase in size and cost of the cooling module, and thus, there is room for improvement.

A need thus exists for a cooling module in which pressure loss is reduced.

### SUMMARY

A characteristic configuration of a cooling module according to the present disclosure is that the cooling module includes a pump that pumps fluid, and a manifold including inside at least one fluid channel through which the fluid flows, in which the manifold includes a discharge portion from which the fluid from the pump is discharged, a channel connection chamber connected to upstream of the fluid channel in a direction in which the fluid flows, and a communication channel allowing the discharge portion and the channel connection chamber to communicate with each other.

With such a characteristic configuration, it is possible to allow the fluid from the pump to flow into the channel connection chamber via the communication channel. Therefore, for example, by setting a channel cross-sectional area or channel cross-sectional shape of the communication channel according to the amount of fluid discharged from the pump, it is possible to implement a cooling module having a simple configuration and capable of reducing pressure loss.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of the cooling module;
Fig. 2 is a diagram showing a configuration of a pump and vicinity thereof;
Fig. 3 is a cross-sectional view taken along line III-III in Fig. 2; and
Fig. 4 is a diagram showing relationship among the pump, a communication channel, and a channel connection chamber.

### DETAILED DESCRIPTION

A cooling module according to the present disclosure is configured to reduce pressure loss of a coolant.

Hereinafter, a cooling module 100 of the present embodiment will be described. The cooling module 100, however, is not limited to the following embodiments, and various modifications may be made without departing from the gist of the modifications.

### [Cooling module]

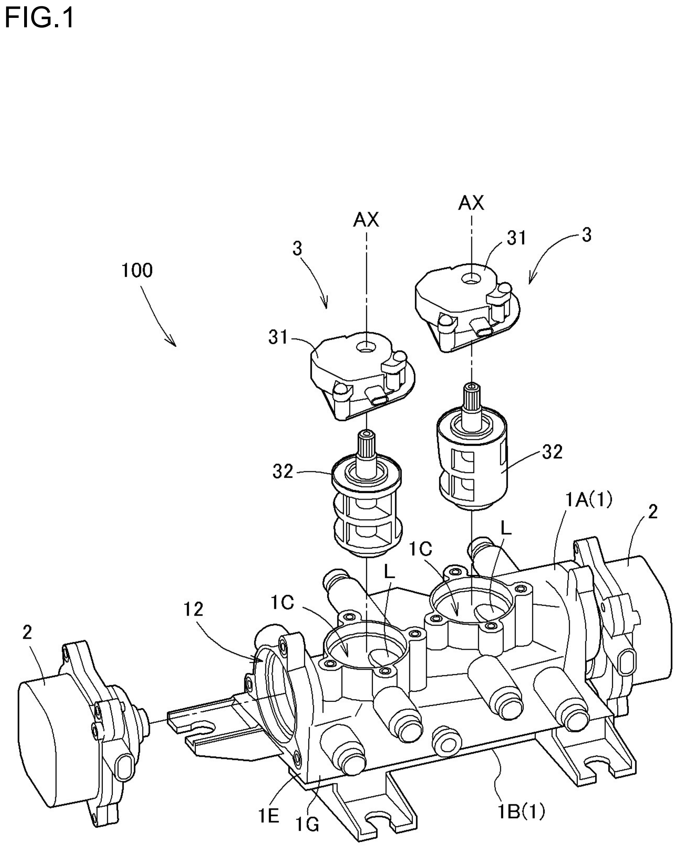

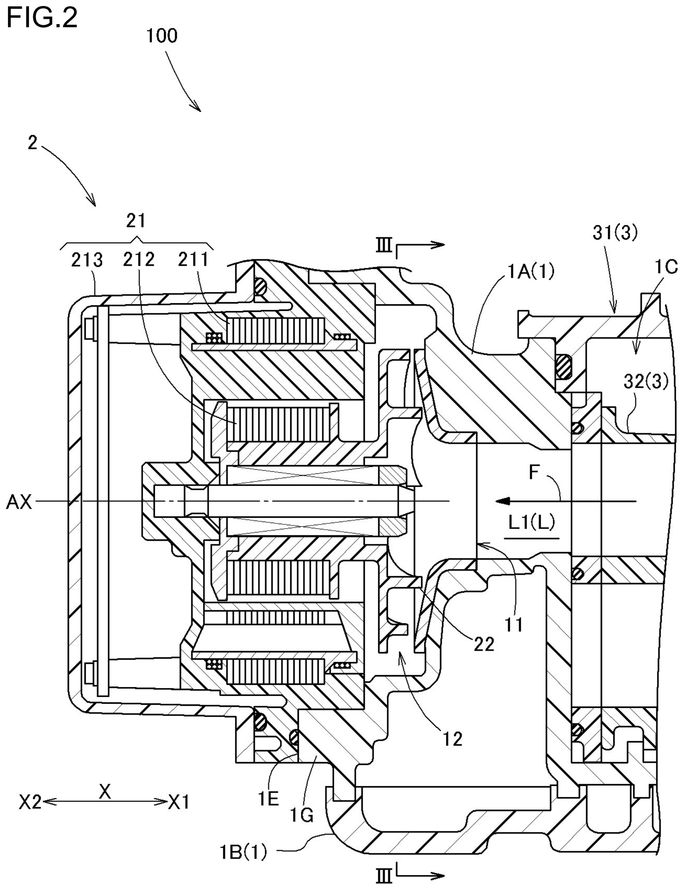

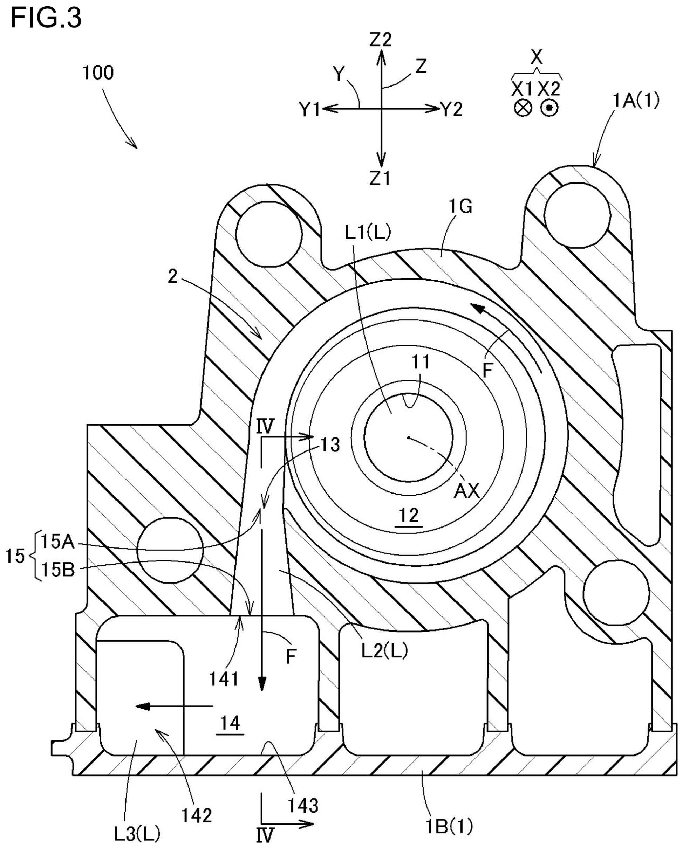

Fig. 1 is an exploded perspective view of the cooling module 100. Fig. 2 is a diagram showing a configuration of a pump 2 and vicinity thereof. Fig. 3 is a cross-sectional view taken along line III-III in Fig. 2. The cooling module 100 is mounted on an electrically powered vehicle (hereinafter, referred to as an "electric vehicle") or the like. Examples of the electric vehicle include a hybrid electric vehicle (HEV), a plug-in hybrid electric vehicle (PHEV), a battery electric vehicle (BEV), a fuel-cell electric vehicle (FCEV), and the like.

The cooling module 100 constitutes a part of a cooling system (not shown) that cools devices to be cooled such as a battery and a vehicle driving device (inverter/motor, for example) that are mounted on an electric vehicle and are for driving the vehicle. The cooling system includes a fluid channel L through which fluid F (refer to Fig. 2) flows. The fluid F is for cooling auxiliary units such as a radiator, a chiller, and pumps 2 and valves 3 shown in Fig. 1, and the devices to be cooled. The cooling auxiliary units and the devices to be cooled (inverter/motor, battery, and the like) are connected via the fluid channel L. The fluid F is cooling fluid such as a long-life coolant (LLC). The fluid F is not limited to the cooling fluid such as a long-life coolant (LLC), and may be an insulating oil such as paraffin, or a refrigerant such as hydrofluorocarbon (HFC) or hydrofluoroolefin (HFO).

As shown in Fig. 1, the cooling module 100 includes a manifold 1, the pumps 2, and the valves 3. In the present embodiment, two pumps 2 and two valves 3 are provided, and the manifold 1, the two pumps 2, and the two valves 3 are integrated. Note that the pumps 2 are electric water pumps, and have substantially the same configuration except for being attached to different positions on the manifold 1. As shown in Fig. 1, each valve 3 is a rotary valve, and includes an actuator 31 that generates power by being supplied with electric power, and a valve body 32 that rotates by the power transmitted from the actuator 31.

### [Manifold]

The manifold 1 has a box shape, and, as shown in Figs. 1 to 3, includes inside at least one fluid channel L through which the fluid F flows. The manifold 1 includes a first housing 1A and second housing 1B made of resin. The manifold 1 is formed by the first housing 1A and the second housing 1B being joined by welding or the like to be integrated. The fluid channel L includes a groove, a hole, and the like that are formed in at least either the first housing 1A or the second housing 1B. In the present embodiment, one fluid channel L corresponds to a third channel L3 through which the fluid F flows from a channel connection chamber 14 to be described later.

### [Pump]

Each pump 2 pumps the fluid F to allow the fluid F to flow in the fluid channel L. Hereinafter, of the fluid channel L, an upstream of the pump 2 is referred to as a "first channel L1" (refer to Fig. 2), and a downstream of the pump 2 is referred to as a "second channel L2" (refer to Fig. 3).

As shown in Fig. 2, the pump 2 includes an electric motor 21 that generates power by being supplied with electric power, and an impeller 22 that rotates by the power from the electric motor 21.

The electric motor 21 includes a stator 211 that generates a magnetic flux by being supplied with electric power, a rotor 21
2 that rotates about a rotation axis AX by the stator 211 generating the magnetic flux, and a motor cover 213 housing the stator 211 and the rotor 212. In the following description, a direction along the rotation axis AX is referred to as an "X direction". Of the X direction, a direction from the electric motor 21 toward the impeller 22 is referred to as an "X1 direction", and a direction opposite thereto is referred to as an "X2 direction".

The electric motor 21 (stator 211, rotor 212, and motor cover 213) is attached by a fastening member such as a bolt to an attachment surface 1E (refer to Fig. 2) provided on an outer wall 1G of the manifold 1 in the X1 direction. The attachment surface 1E is a plane orthogonal to the X direction and is a part of the outer wall 1G of the manifold 1. Therefore, in the pump 2, only the electric motor 21 is provided outside the manifold 1.

As shown in Figs. 2 and 3, the manifold 1 also has some functions of the pump 2. As described above, in the present embodiment, the two pumps 2 are attached to the manifold 1, and configurations of portions of the manifold 1 to which the two pumps 2 are attached are substantially the same. Therefore, hereinafter, one side (an end in the X2 direction) of the manifold 1 will be described as an example.

As shown in Fig. 3, the manifold 1 includes a suction port 11 (an intake port of the pump 2) which is a connection port with the first channel L1, a volute chamber 12 communicating with the suction port 11, a discharge portion 13 communicating with the volute chamber 12, the channel connection chamber 14, and a communication channel 15. The suction port 11, the volute chamber 12, and the discharge portion 13 are provided (formed) in the X1 direction (inside the manifold 1) with respect to the attachment surface 1E.

The suction port 11 has a circular shape as viewed in the X direction, and an axis of the suction port 11 is parallel to the X direction. As shown in Fig. 2, the suction port 11 faces a portion (hereinafter, referred to as a "valve housing 1C") housing the valve 3 (valve body 32) of the first housing 1A in the X direction. As a result, pressure loss of the fluid F can be reduced. A configuration of the fluid channel L (first channel L1) between the valve 3 and the suction port 11 can be avoided from being complicated.

As shown in Fig. 3, the volute chamber 12 has a circular shape centered on the suction port 11 as viewed along the X direction, and increases in diameter in the X2 direction (inner diameter increases). As shown in Fig. 2, the impeller 22 is rotatably disposed in the volute chamber 12. In the present embodiment, the impeller 22 rotates counterclockwise as viewed along the X1 direction. As a result, the fluid F is sucked into the volute chamber 12 from the first channel L1 via the suction port 11. The fluid F flowing into the volute chamber 12 swirls (swirls counterclockwise as viewed along the X1 direction) with the rotation of the impeller 22, and then flows to the discharge portion 13.

The discharge portion 13 discharges the fluid F from the pump 2. As shown in Fig. 3, the discharge portion 13 is provided downstream of a direction in which the fluid F flows (a direction in which the impeller 22 rotates) in the volute chamber 12. The fluid F from the volute chamber 12 flows into the discharge portion 13, and the discharge portion 13 discharges the fluid F. The discharge portion 13 communicates with the communication channel 15 provided in the manifold 1. That is, the fluid F discharged from the discharge portion 13 flows through the communication channel 15.

The communication channel 15 allows the discharge portion 13 and the channel connection chamber 14 to communicate with each other. As described above, the fluid F flows from the discharge portion 13 into the communication channel 15. The channel connection chamber 14 is provided downstream of the communication channel 15, and the fluid F flowing through the communication channel 15 flows into the channel connection chamber 14. Hereinafter, of the communication channel 15, a portion where the fluid F flows in from the discharge portion 13 is referred to as an inlet 15A, and a portion where the fluid F flows out to the channel connection chamber 14 is referred to as an outlet 15B. The inlet 15A corresponds to substantially the same portion as the discharge portion 13. An axis of the outlet 15B is orthogonal to the axis of the suction port 11. Hereinafter, a direction along the axis of the outlet 15B is referred to as a "Z direction", and a direction orthogonal to the X direction and the Z direction is referred to as a "Y direction".

The communication channel 15 has a channel cross-sectional area gradually increasing from the upstream to the downstream in the direction in which the fluid F flows. The channel cross-sectional area is an area of a plane of the communication channel 15 extending along the Z direction, the plane being orthogonal to the Z direction. The upstream in the direction in which the fluid F flows means an inlet 15A side, and the downstream in the direction in which the fluid F flows means an outlet 15B side.

The communication channel 15 of the present embodiment has a circular channel cross-section from the upstream to the downstream. The channel cross-section has a shape of the plane of the communication channel 15 extending along the Z direction, the plane being orthogonal to the Z direction. Therefore, the communication channel 15 extends along the Z direction and increases in diameter from the inlet 15A toward the outlet 15B (inner diameter increases in a Z1 direction). That is, the communication channel 15 is formed such that the channel cross-sectional area increases from the inlet 15A toward the outlet 15B. In the present embodiment, the channel cross-sectional area of the discharge portion 13 (inlet 15A) is smaller than the channel cross-sectional area upstream of the discharge portion 13 (inlet 15A) in the second channel L2 in the direction in which the fluid F flows.

The fluid F flowing into the communication channel 15 from the volute chamber 12 via the discharge portion 13 (inlet 15A) flows out to the channel connection chamber 14 via the outlet 15B. Hereinafter, of the Z direction, a direction along a direction in which the fluid F (main stream of the fluid F) flows out from the outlet 15B is referred to as the "Z1 direction", and a direction opposite thereto is referred to as a "Z2 direction".

### [Channel connection chamber]

The channel connection chamber 14 is connected to upstream of the third channel L3 (an example of the "fluid channel L") in the direction in which the fluid F flows. The fluid F flowing out from the outlet 15B flows into the channel connection chamber 14.

The channel connection chamber 14 communicates with the communication channel 15 (outlet 15B), and also with the third channel L3. That is, the channel connection chamber 14 connects the second channel L2 and the third channel L3. Therefore, the channel connection chamber 14 is provided between the second channel L2 and the third channel L3.

In the present embodiment, the channel connection chamber 14 has a substantially rectangular parallelepiped shape, and has a substantially rectangular shape with the Y direction as a longitudinal direction as viewed along the X direction.

The channel connection chamber 14 has an inlet 141 communicating with the communication channel 15 (outlet 15B) and an outlet 142 communicating with the third channel L3. The fluid F flowing into the channel connection chamber 14 via the outlet 15B and the inlet 141 flows to the third channel L3 via the outlet 142.

The inlet 141 and the outlet 142 are provided spaced apart from each other in the Y direction. Of the Y direction, a direction from the inlet 141 toward the outlet 142 is referred to as a "Y1 direction", and a direction opposite thereto is referred to as a "Y2 direction".

An axis of the inlet 141 is parallel to the Z direction, and axes of the outlet 142 and third channel L3 are parallel to the X direction. That is, an axis of the outlet 142 is orthogonal to an axial direction of the inlet 141 (outlet 15B) and is parallel to the axis of the suction port 11.

The channel connection chamber 14 is provided as a buffer (reserve space) for the fluid F discharged from the pump 2 to smoothly flow to the third channel L3, and has a sufficient capacity so as not to affect the pressure loss of the fluid F. In the present embodiment, the channel connection chamber 14 is formed to have a larger space through which the fluid F can flow (channel cross-sectional area) than the third channel L3. The channel connection chamber 14 is formed such that the channel cross-sectional area is larger than a maximum channel cross-sectional area of the communication channel 15.

The channel connection chamber 14 is formed such that a distance from the inlet 141 in the channel connection chamber 14, the inlet 141 communicating with the communication channel 15, to a wall portion 143 in the channel connection chamber 14, the wall portion 143 facing the inlet 141 along the direction in which the fluid F flows, is longer than a length of the communication channel 15 along an axis of the communication channel 15. The inlet 141 communicating with the communication channel 15 in the channel connection chamber 14 is the outlet 15B that is a downstream end of the communication channel 15. The wall portion 143 facing the inlet 141 in the channel connection chamber 14, the inlet 141 being along the direction in which the fluid F flows, is a wall portion in front of a wall portion provided with the inlet 141, among wall portions that constitute the channel connection chamber 14 having a substantially rectangular parallelepiped shape.

Therefore, the channel connection chamber 14 is formed such that a distance from the inlet 141 to a wall portion (wall portion 143) in front of the wall portion provided with the inlet 141 among the wall portions that constitute the channel connection chamber 14 having a substantially rectangular parallelepiped shape is longer than the length of the communication channel 15 along the axis thereof. That is, in the channel connection chamber 14, the distance between the inlet 141 and the wall portion 143 is longer than the length of the communication channel 15 along the axis thereof.

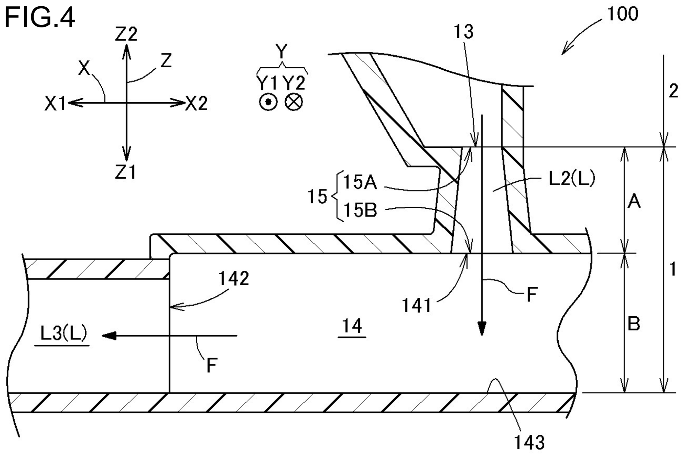

Fig. 4 is a cross-sectional view taken along line IV-IV in Fig. 3, and is a diagram showing relationship among the pump 2, the communication channel 15, and the channel connection chamber 14. The communication channel 15 and the channel connection chamber 14 are provided in the manifold 1. As shown in Fig. 4, the inlet 15A of the communication channel 15 is connected to the discharge portion 13 of the pump 2, and the outlet 15B of the communication channel 15 is connected to the inlet 141 of the channel connection chamber 14. The communication channel 15 corresponds to the second channel L2, and the outlet 142 of the channel connection chamber 14 is provided with the third channel L3. The wall portion 143 is provided on a portion facing the inlet 141 in the channel connection chamber 14.

The communication channel 15 is formed in a conical shape of which a diameter gradually increases. As a result, a flow rate of the fluid F flowing through the communication channel 15 is decreased, and pressure loss can be reduced. In addition, the channel cross-section has a circular shape, and thus the pressure loss can be reduced in this respect also. A connection chamber length B, which is a length from the inlet 141 to the wall portion 143 of the channel connection chamber 14, is formed longer than a communication channel length A, which is a length of the communication channel 15 along the axis thereof. That is, the connection chamber length B is formed such that A < B holds. As a result, it is possible to decrease the flow rate of the fluid F when the fluid F flowing into the channel connection chamber 14 from the communication channel 15 reaches the wall portion 143, and it is also possible to reduce chances of occurrence (influence) of pressure loss caused by collision between the fluid F discharged from the pump 2 and the fluid F bounced back from the wall portion 143. As described above, according to the cooling module 100, the pressure loss can be reduced.

### [Other embodiments]

Next, other embodiments of the cooling module 100 will be described.

In the above embodiment, it has been described that the communication channel 15 has a channel cross-sectional area gradually increasing from the upstream to the downstream in the direction in which the fluid F flows. However, the communication channel 15 may have a uniform channel cross-sectional area from the upstream to the downstream in the communication channel 15.

In the above embodiment, the communication channel 15 has been described as having a circular channel cross-section from the upstream to the downstream. However, the channel cross-section of the communication channel 15 may have a shape different from a circular shape (polygon, for example) or may have an oval shape, from the upstream to the downstream.

In the above embodiment, it has been described that the distance (connection chamber length B) from the inlet 141 in the channel connection chamber 14, the inlet 141 communicating with the communication channel 15, to the wall portion 143 in the channel connection chamber 14, the wall portion 143 facing the inlet 141 along the direction in which the fluid F flows, is longer than the length (communication channel length A) of the communication channel 15 along the axis thereof. However, the connection chamber length B may be equal to or shorter than the communication channel length A.

### [Overview of above embodiments]

Hereinafter, an overview of the cooling module 100 described above will be described.

A cooling module 100 includes a pump 2 that pumps fluid F, and a manifold 1 including inside at least one fluid channel L through which the fluid F flows, in which the manifold 1 includes a discharge portion 13 from which the fluid F from the pump 2 is discharged, a channel connection chamber 14 connected to upstream of the fluid channel L in a direction in which the fluid F flows, and a communication channel 15 allowing the discharge portion 13 and the channel connection chamber 14 to communicate with each other.

According to this configuration, it is possible to allow the fluid F from the pump 2 to flow into the channel connection chamber 14 via the communication channel 15. Therefore, for example, by setting a channel cross-sectional area or channel cross-sectional shape of the communication channel 15 according to an amount of the fluid F discharged from the pump 2, it is possible to implement the cooling module 100 having a simple configuration and capable of reducing pressure loss.

(2) In the cooling module 100 according to (1), the communication channel 15 preferably has a channel cross-sectional area gradually increasing from upstream to downstream in the direction in which the fluid F flows.

According to this configuration, a flow rate of the fluid F flowing through the communication channel 15 is decreased, and pressure loss in the communication channel 15 can be reduced.

(3) In the cooling module 100 according to (2), the communication channel 15 preferably has a circular channel cross-section from the upstream to the downstream.

According to this configuration, the communication channel 15 can be formed in a conical shape. Therefore, pressure loss in the communication channel 15 can be reduced.

(4) In the cooling module 100 according to any one of (1) to (3), a distance from an inlet 141 in the channel connection chamber 14, the inlet 141 communicating with the communication channel 15, to a wall portion 143 in the channel connection chamber 14, the wall portion 143 facing the inlet 141 along the direction in which the fluid F flows, is preferably longer than a length of the communication channel 15 along an axis of the communication channel 15.

According to this configuration, it is possible to decrease the flow rate of the fluid F when the fluid F flowing into the channel connection chamber 14 from the communication channel 15 reaches the wall portion 143, and it is also possible to reduce chances of occurrence (influence) of pressure loss caused by collision between the fluid F discharged from the pump 2 and the fluid F bounced back from the wall portion 143. Therefore, pressure loss in the channel connection chamber 14 can be reduced.

The technology according to the present disclosure can be used for the cooling module 100.

## Claims

1. A cooling module (100) comprising:
a pump (2) that pumps fluid (F); and
a manifold (1) including inside at least one fluid channel (L) through which the fluid (F) flows, wherein
the manifold (1) includes
a discharge portion (13) from which the fluid (F) from the pump (2) is discharged,
a channel connection chamber (14) connected to upstream of the fluid channel (L) in a direction in which the fluid (F) flows, and
a communication channel (15) allowing the discharge portion (13) and the channel connection chamber (14) to communicate with each other.

2. The cooling module (100) according to Claim 1, wherein the communication channel (15) has a channel cross-sectional area gradually increasing from upstream to downstream in the direction in which the fluid (F) flows.

3. The cooling module (100) according to Claim 2, wherein the communication channel (15) has a circular channel cross-section from the upstream to the downstream.

4. The cooling module (100) according to any one of Claims 1 to 3, wherein a distance from an inlet (141) in the channel connection chamber (14), the inlet (141) communicating with the communication channel (15), to a wall portion (143) in the channel connection chamber (14), the wall portion (143) facing the inlet (141) along the direction in which the fluid (F) flows, is longer than a length of the communication channel (15) along an axis of the communication channel (15).
